# FASCICULE DE BREVET EUROPEEN

(11) **EP 0 863 634 B1**
(45) Date de publication et mention de la délivrance du brevet: **12.10.2005**
(21) Numéro de dépôt: 98400329.3
(22) Date de dépôt: 12.02.1998
(51) Int. Cl.: H04J 14/02

(54) **Réseau de transmission en anneau reconfigurable avec multiplexage en longueur d'onde pour liaisons semi-permanentes**
Rekonfigurierbares optisches Ringübertragungsnetz mit Wellenlängenmultiplexing für halbpermanente Verbindungen
Reconfigurable optical ring transmission network with wavelength division multiplexing for semi-permanent links

(30) Priorité: 14.02.1997 FR 9701744
(43) Date de publication de la demande: 09.09.1998
(73) Titulaire: FRANCE TELECOM, 75015 Paris (FR)
(72) Inventeur: Hamel, André, 22300 Lannion (FR); Laville, Daniel, 22700 Perros Guirec (FR); Stoschek, Jean, 22560 Pleumeur Bodou (FR)
(74) Mandataire: Poulin, Gérard

(56) Documents cités:
- EP-A- 0 743 772
- US-A- 5 576 875
- WAGNER S S ET AL: "MULTIWAVELENGTH RING NETWORKS FOR SWITCH CONSOLIDATION AND INTERCONNECTION" DISCOVERING A NEW WORLD OF COMMUNICATIONS, CHICAGO, JUNE 14 - 18, 1992 BOUND TOGETHER WITH B0190710, VOL. 4, vol. 3 OF 4, 14 juin 1992, INSTITUTE OF ELECTRICAL AND ELECTRONICS ENGINEERS, pages 1173-1179, XP000337910
- KUO-CHUN LEE ET AL: "ROUTING AND SWITCHING IN A WAVELENGTH CONVERTIBLE OPTICAL NETWORK" NETWORKING: FOUNDATION FOR THE FUTURE, SAN FRANCISCO, MAR. 28 - APR. 1, 1993, vol. 2, 28 mars 1993, INSTITUTE OF ELECTRICAL AND ELECTRONICS ENGINEERS, pages 578-585, XP000399037

## Description

### DOMAINE TECHNIQUE

La présente invention concerne un réseau de transmission reconfigurable pour liaisons semi-permanentes ou, plus généralement, temporaires.

Elle s'applique notamment aux télécommunications optiques.

### ÉTAT DE LA TECHNIQUE ANTÉRIEURE

Les réseaux connus, qui réalisent des liaisons temporaires entre deux usagers, sont fondés sur une architecture en étoile et le multiplexage en longueur d'onde.

Les ressources d'un réseau de ce type sont mises en commun par un coupleur optique.

Chaque station du réseau est équipée d'un filtre optique accordable qui sélectionne la longueur d'onde servant de support pour transmettre l'information.

Avec les composants commercialement disponibles, il est nécessaire de verrouiller le filtre sur la longueur d'onde de travail pour assurer un fonctionnement stable.

A ce sujet, on se reportera au document (1) qui, comme les autres documents cités par la suite, est mentionné à la fin de la présente description.

La gestion du réseau et la mise en communication sont gérées par un réseau de données qui est superposé au réseau en étoile.

L'inconvénient d'un tel réseau en étoile réside dans le manque de moyens de sécurité en cas de panne simple de fibre optique.

En effet, deux fibres optiques assurent la transmission des informations entre le coupleur optique, qui peut être simple ou multiple, et une station.

Si une coupure de fibre se produit, la station est alors isolée du reste du réseau.

On connaît également par le document (2) une architecture en étoile passive.

Les anneaux connus, destinés à la transmission appelée Hiérarchie Numérique Synchrone ou HNS (« *Synchronous Digital Hierarchy » ou « SDH »),* comportent deux fibres optiques qui ont des sens de propagation opposés et assurent la transmission des informations même en cas de rupture de câble.

A ce sujet, on se reportera au document (3).

Les architectures reconfigurables connues sont fondées sur le routage spectral et l'utilisation de filtre optiques accordables.

A ce sujet, on se reportera au document (4).

Deux catégories de filtres sont actuellement disponibles.

La première catégorie comprend les filtres Fabry-Pérot fibrés et réalisés avec les techniques de la micro-optique.

Plusieurs produits de ce genre sont commercialement disponibles.

Les pertes d'insertion correspondantes sont d'environ 2 dB et la finesse est comprise entre 100 et 200.

Cependant, ces filtres Fabry-Pérot fibrés sont des composants à deux voies qui permettent seulement la sélection d'une longueur d'onde parmi plusieurs.

La fonction d'insertion-extraction (« *add-drop* ») est obtenue avec un coupleur optique.

La deuxième catégorie est constituée par le modulateur acousto-optique réalisé en optique intégrée sur LiNbO₃.

Ce modulateur a directement la fonction d'insertion-extraction et son domaine d'accordabilité est d'environ 100 nm.

Il possède de plus l'avantage de permettre une sélection multiple de canaux.

Il a été expérimenté pour une transmission avec une distance entre canaux de 4 nm.

A ce sujet, on se reportera au document (5).

De tels modulateurs en sont encore au stade du laboratoire et sont pénalisés par un fort niveau de diaphonie (de 15 à 18 dB), ce qui limite leur application à de grandes distances entre canaux (supérieure à 4 nm) et rend critique la réutilisation de longueurs d'onde.

Ces modulateurs présentent un coefficient de température élevé (de l'ordre de 0,1 nm/°C) et nécessitent de ce fait une stabilisation en température afin que leur fonctionnement soit stable.

Enfin, avec les deux catégories de filtres considérées, il est nécessaire d'utiliser un asservissement pour verrouiller une station sur la longueur d'onde choisie, en plus de la commande qui assure la sélection de cette longueur d'onde.

Le document US 5 576 875 representant l'état de la technique le plus proche, décrit un réseau optique en anneau, des moyens d'insertion-extraction électroniques, des moyens d'emission-reception et des moyens de gestion du réseau.

### EXPOSÉ DE L'INVENTION

La présente invention a pour but de remédier aux inconvénients précédents, liés à l'utilisation de filtres accordables.

Pour ce faire, l'invention utilise le routage spectral sur un réseau en anneau, avec des filtres optiques fixes et des commutateurs optiques destinés à établir des liaisons entre les stations ou les usagers du réseau.

De façon précise, la présente invention a pour objet un réseau de transmission reconfigurable, pour le raccordement d'usagers, ce réseau comprenant au moins un anneau de transmission d'informations sous forme optique et des moyens de gestion du réseau, chaque anneau comprenant :
- une pluralité de noeuds, chaque noeud étant associé à un site comprenant au moins un usager, et
- au moins une fibre optique en anneau qui passe successivement par les noeuds et qui est destinée à être parcourue dans un sens déterminé par les informations,
ce réseau étant caractérisé en ce qu'il comprend en outre :
- dans chaque site, des moyens d'émission-réception à au moins une longueur d'onde particulière, et
- dans chaque noeud, des moyens d'insertion-extraction optique à la longueur d'onde particulière et des moyens de commutation optique qui sont aptes à se trouver dans des premier et deuxième états, sont commandés par les moyens de gestion du réseau et sont aptes à relier optiquement les moyens d'émission-réception, que comprend le site correspondant, aux moyens d'insertion-extraction lorsqu'ils sont dans le premier état et à isoler optiquement les moyens d'émission-réception des moyens d'insertion-extraction lorsqu'ils sont dans le deuxième état, ces moyens d'insertion-extraction étant destinés à extraire, de chaque fibre optique en anneau, des informations à la longueur d'onde particulière pour les envoyer aux moyens d'émission-réception du site correspondant et à insérer, dans chaque fibre optique en anneau, des informations à la longueur d'onde particulière provenant de ces moyens d'émission-réception,
de manière à pouvoir créer, sous la commande des moyens de gestion, des liaison optiques temporaires à la longueur d'onde particulière, entre des usagers de sites distincts, à raison de deux usagers à la fois.

Selon un mode de réalisation préféré du réseau objet de l'invention, chaque noeud comprend un multiplexeur à insertion-extraction électronique qui est destiné à échanger des informations sous forme optique avec le site correspondant et par l'intermédiaire duquel les moyens de gestion commandent les moyens de commutation optique de ce noeud.

Selon un premier mode de réalisation particulier du réseau objet de l'invention, l'anneau est relié à un réseau principal de transmission d'informations, au moins un multiplexeur à insertion-extraction électronique étant installé sur ce réseau principal de transmission d'informations, muni de moyens d'émission-réception à longueur d'onde particulière et relié à l'anneau par l'intermédiaire de moyens d'insertion-extraction à la longueur d'onde particulière.

Selon un deuxième mode de réalisation particulier, le réseau comprend une pluralité d'anneaux reliés à un réseau principal de transmission d'informations, une pluralité de multiplexeurs à insertion-extraction électroniques étant installés sur ce réseau principal de transmission d'informations et respectivement associés aux anneaux, chaque multiplexeur à insertion-extraction électronique étant muni de moyens d'émission-réception à la longueur d'onde particulière et relié à l'anneau correspondant par l'intermédiaire de moyens d'insertion-extraction à la longueur d'onde particulière.

Au moins un site peut comprendre N usagers respectivement associés à N moyens d'émission-réception dans ce site, N étant un nombre entier au moins égal à 2, le noeud correspondant à ce site comprenant en outre N commutateurs optiques de type 1 vers N qui sont commandés par les moyens de gestion du réseau de manière à pouvoir créer une liaison optique à la longueur d'onde particulière entre l'un quelconque des usagers de ce site et un usager d'un autre site.

De préférence, le réseau comprend deux fibres optiques en anneau qui sont destinées à être parcourues en sens contraires par les informations.

Les moyens de commutation optiques aptes à se trouver dans les premier et deuxième états peuvent être des commutateurs de type cross-bar.

A titre d'exemple, les informations sous forme optique ont une longueur d'onde égale à 1,3 µm et la longueur d'onde particulière est égale à 1,5 µm.

Chaque site peut comprendre des moyens d'émission-réception à une pluralité de longueurs d'onde particulières, qui sont respectivement associés à une pluralité de moyens d'insertion-extraction optiques à ces longueurs d'onde particulières, de manière à pouvoir établir simultanément une pluralité de liaisons optiques temporaires.

De préférence, chaque anneau est conçu pour utiliser la norme Hiérarchie Numérique Synchrone.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue schématique d'un anneau HNS standard unidirectionnel,
- la figure 2 est une vue schématique d'un mode de réalisation particulier du réseau en anneau objet de l'invention permettant de relier des usagers d'un même anneau,
- les figures 3 et 4 illustrent schématiquement les deux états de commutateurs optiques cross-bar faisant partie du réseau de la figure 2,
- la figure 5 est une vue schématique d'un autre mode de réalisation particulier permettant de relier les usagers de deux anneaux différents, et
- la figure 6 est une vue schématique et partielle d'un autre mode de réalisation particulier dans lequel plusieurs usagers sont associés à un même noeud d'un anneau.

### EXPOSÉ DÉTAILLÉ DE MODES DE RÉALISATION PARTICULIERS

Avec l'introduction de la Hiérarchie Numérique Synchrone, les architectures de transmission en anneau présentent un intérêt économique et une meilleure fiabilité.

Actuellement, des équipements électroniques appelés multiplexeurs à insertion-extraction électroniques ou MIE (« add-drop multiplexers » ou « ADM ») sont installés à chaque noeud d'un réseau en anneau et les informations sont transmises par des fibres optiques qui assurent la jonction entre les noeuds du réseau.

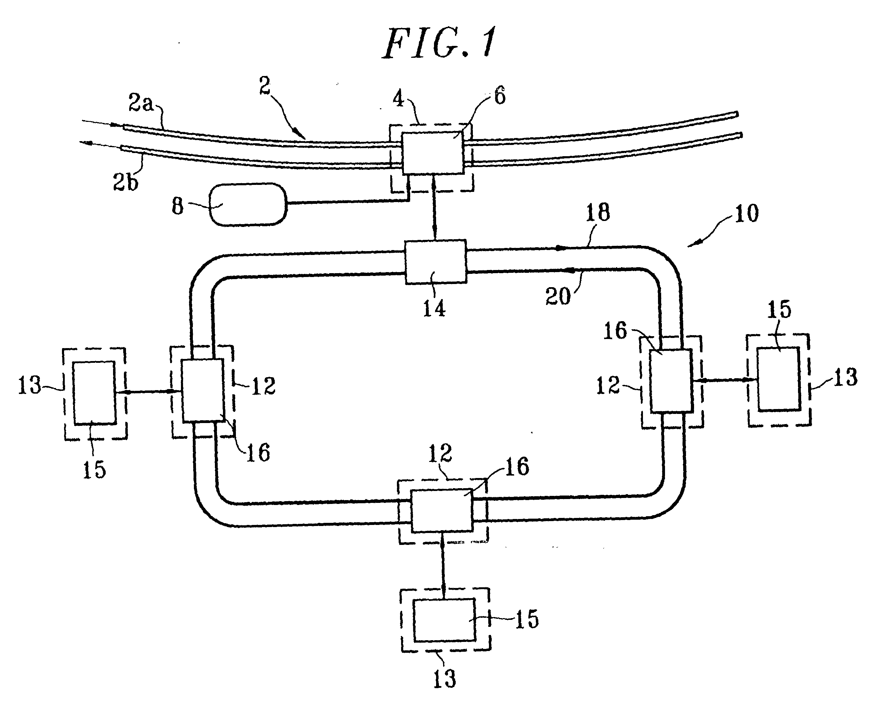

Ceci est schématiquement illustré par la figure 1 où l'on voit un réseau de transmission principal 2 en forme d'anneau (partiellement représenté).

Ce réseau 2 comprend deux fibres optiques 2a et 2b qui sont parcourues en sens contraires par des informations sous forme optique et qui passent successivement par les noeuds du réseau 2.

On voit l'un 4 de ces noeuds qui est appelé noeud principal et dans lequel se trouve un MIE 6.

Ce MIE 6 est relié à des moyens de gestion de réseau 8.

On voit également sur la figure 1 un autre réseau 10 en forme d'anneau qui comprend plusieurs noeuds 12, trois noeuds dans l'exemple représenté.

Le réseau 10 comprend également un autre MIE 14 qui est relié au MIE 4.

Chacun des noeuds 12 est associé à un site 13 qui correspond à un usager muni d'un équipement 15.

Cet équipement 15 est un MIE ou, de préférence, un multiplexeur terminal.

De plus, chaque noeud 12 contient un MIE 16 qui est destiné à échanger des informations sous forme optique avec l'équipement 15 qui se trouve dans le site 13 associé à ce noeud.

Les noeuds 12 ainsi que le MIE 14 sont reliés les uns aux autres par une fibre optique 18 appelée fibre normale qui forme une boucle dans laquelle les informations circulent dans un sens déterminé depuis le MIE 14 en passant successivement par les noeuds 12 pour revenir à ce MIE 14.

Dans l'exemple représenté, une autre fibre optique 20 appelée fibre de secours forme aussi une boucle dans laquelle les informations circulent dans le sens opposé au précédent depuis le MIE 14 en passant successivement par les noeuds 12 pour revenir à ce MIE 14.

Le réseau 10 est un anneau HNS standard unidirectionnel à MIE qui n'utilise qu'une seule longueur d'onde optique λ, par exemple égale à 1,3 µm, pour la circulation des informations sur les fibres 18 et 20.

Les usagers échangent des informations à cette longueur d'onde λ les uns avec les autres.

Conformément à la présente invention, on modifie le réseau de la figure 1 en vue d'établir des liaisons optiques temporaires entre les usagers du réseau, à raison de deux usagers à la fois, à une longueur d'onde λc (différente de λ), en plus des liaisons déjà existantes à la longueur d'onde λ.

On dispose ainsi de services supplémentaires (correspondant à cette longueur d'onde λc) qui s'ajoutent aux services déjà installés sur le réseau (à la longueur d'onde λ).

Les liaisons à la longueur d'onde λc sont reconfigurables et l'on réalise un multiplexage des longueurs d'onde λ et λc.

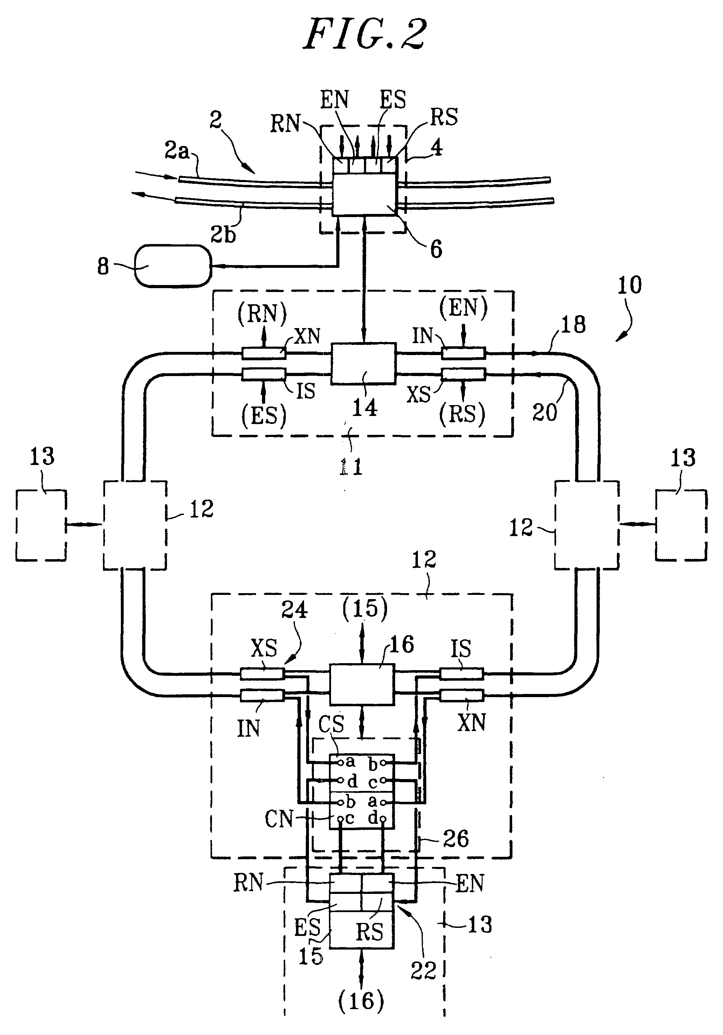

Pour ce faire, comme l'illustre schématiquement la figure 2, on munit l'équipement 15 (MIE ou multiplexeur terminal), qui se trouve dans chaque site 13, de moyens d'émission-réception 22 à la longueur d'onde λc et l'on ajoute, dans chaque noeud 12, des moyens d'insertion-extraction optique à la longueur d'onde λc 24 et des moyens de commutation optique 26.

Ces ajouts sont représentés de façon détaillée sur la figure 2 pour l'un des noeuds 12 mais ne sont pas représentés pour les deux autres noeuds 12.

Comme l'anneau 10 de la figure 2 comprend une fibre optique normale 18 et une fibre optique de secours 20, les moyens ajoutés 22, 24 et 26 sont doubles.

Les moyens 22 comprennent, pour la fibre 18 (respectivement la fibre 20), un émetteur EN et un récepteur RN (respectivement un émetteur ES et un récepteur RS).

Les moyens 24 comprennent, pour la fibre 10 (respectivement la fibre 20), un moyen XN (respectivement XS) permettant d'extraire les signaux de longueur d'onde λc se propageant dans cette fibre et un moyen IN (respectivement IS) permettant d'insérer des signaux de longueur d'onde λc parmi les signaux qui circulent dans cette fibre.

Comme on le voit sur la figure 2, en considérant le sens de propagation de la lumière dans chacune des fibres 18 et 20, les moyens XN et XS sont montés en amont du MIE 16 tandis que les moyens IN et IS sont montés en aval de ce MIE 16.

Les moyens 26 comprennent un commutateur optique CN associé à la fibre 18 et un commutateur optique CS associé à la fibre 20.

Chacun de ces commutateurs optique CN et CS est apte à se trouver dans deux états distincts.

On utilise par exemple des commutateurs optiques de type cross-bar.

Les moyens de gestion 8 envoient des signaux de commande aux commutateurs CN et CS par l'intermédiaire du MIE 6, du MIE 14, des fibres 18 et 20 et du MIE 16.

Ces signaux de commande permettent de mettre chacun de ces commutateurs dans l'état souhaité.

Comme on le voit sur la figure 2, chacun de ces commutateurs CN et CS a quatre bornes a, b, c et d.

Les bornes a des commutateurs CN et CS sont respectivement reliées aux moyens XN et XS.

Les bornes b des commutateurs CN et CS sont respectivement reliées aux moyens IN et IS.

Les bornes c des commutateurs CN et CS sont respectivement reliées aux récepteurs RN et RS.

Les bornes d des commutateurs CN et CS sont respectivement reliées aux émetteurs EN et ES.

Comme on le voit sur la figure 2, on a également muni le MIE 6, que comprend le noeud 4 du réseau principal 2, de deux cartes-affluents comprenant chacune un émetteur et un récepteur à la longueur λc.

Dans ces cartes-affluents, les émetteurs correspondant respectivement aux fibres 10 et 20 ont encore les références respectives EN et ES.

Les récepteurs correspondant respectivement à ces fibres 10 et 20 ont encore respectivement les références RN et RS.

On a également monté sur les fibres 10 et 20, à proximité du MIE 14 qui est relié au MIE 6, des moyens d'insertion-extraction à la longueur d'onde particulière λc qui sont encore référencés IN, XN et IS, XS.

Ces moyens XN, IN, XS et IS sont respectivement reliés au récepteur RN, à l'émetteur EN, au récepteur RS et l'émetteur ES du MIE 6 comme on le voit sur la figure 2.

Vis-à-vis du sens de propagation de la lumière dans les fibres 10 et 20, chacun des moyens XN et XS est monté en amont du MIE 14 tandis que chacun des moyens IN et IS est monté en aval de ce MIE 14.

L'anneau 10 se refermant sur lui-même (en ce qui concerne les communications entre ses noeuds) par l'intermédiaire du noeud 4 du réseau 2, chacun des émetteurs EN et ES à la longueur d'onde λc, dont est muni le MIE 6, est destiné à envoyer les informations à cette longueur d'onde λc aux usagers de l'anneau 10.

De même, chacun des récepteurs RN et RS à la longueur d'onde λc, dont est muni ce MIE 6, est destiné à détecter les informations à cette longueur d'onde λc provenant de ces usagers.

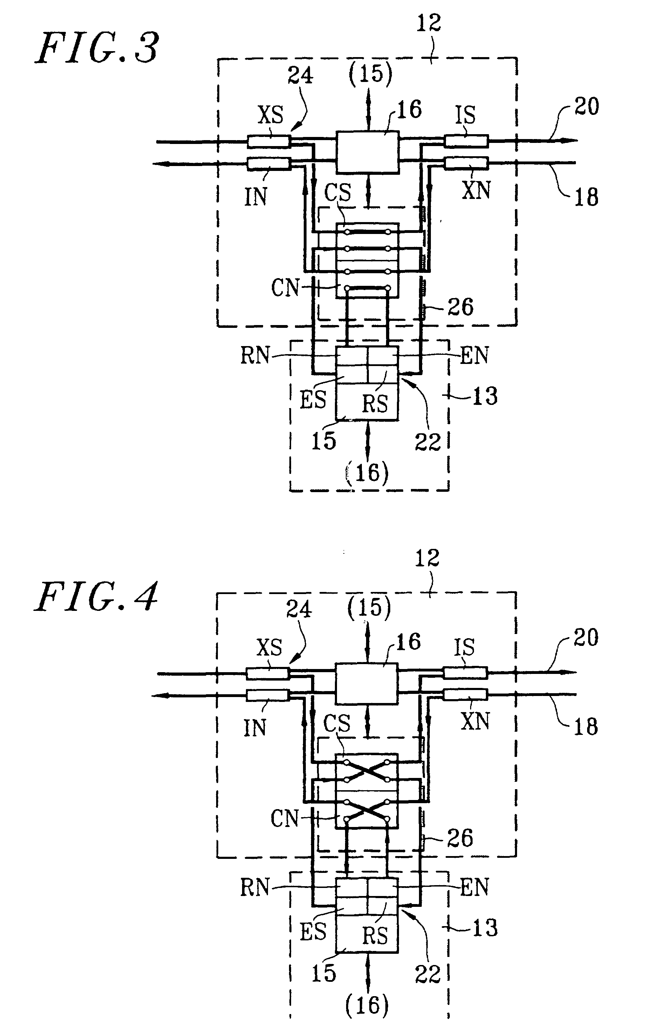

La figure 3 illustre schématiquement la configuration d'un noeud 12 au repos.

Dans ce cas, chacun des commutateurs optiques CN et CS de ce noeud 12 est dans l'état « bar » et l'équipement 15 de l'usager associé à ce noeud est déconnecté de l'anneau 10.

La figure 4 illustre schématiquement la configuration contraire de ce noeud 12.

Dans le cas de la figure 4, les deux commutateurs optiques CN et CS sont au contraire dans l'état « cross ».

Dans ces conditions, l'équipement 15 de l'usager associé au noeud 12 est, au contraire, connecté à l'anneau 10.

Il est à noter que ces commutateurs cross-bar sont commandés par des signaux de longueur d'onde λ par l'intermédiaire du MIE associé 16.

L'équipement 15 de chaque usager est par exemple un MIE STM-1 ou préférentiellement un multiplexeur terminal recevant un débit STM-1 avec une charge numérique utile (2, 8, 34 ou 140 Mbit/s) ou ATM.

De plus, les longueurs d'onde λ et λc sont par exemple respectivement égales à 1,3 µm et 1,5 µm.

Les commutateurs optiques cross-bar sont commandés par l'opérateur de réseau à partir de la supervision de l'anneau par exemple grâce aux entrées et sorties d'environnement qui équipent les MIE utilisés pour la HNS.

Il est possible de commander l'état d'une sortie et donc d'imposer à un commutateur de passer à l'état « cross ».

Une entrée d'environnement est utilisée pour vérifier l'état activé du commutateur avant de donner l'accord aux usagers pour établir une communication.

Les moyens d'insertion et d'extraction à la longueur d'onde λc (filtres optiques) sont commercialement disponibles auprès des sociétés ATI, JDS, E-Tek et Dicon avec une perte inférieure à 1,5 dB.

Les commutateurs optiques de type cross-bar utilisés sont disponibles auprès des mêmes sociétés avec une perte inférieure à 1 dB.

De plus, à titre purement indicatif et nullement limitatif, on utilise des tensions de commande de 5 V.

Le réseau conforme à l'invention schématiquement représenté sur la figure 2 permet de mettre, à la demande, deux usagers en communication l'un avec l'autre.

Lorsque tous les commutateurs optiques CN et CS de l'anneau 10 sont dans l'état « bar », les signaux de longueur d'onde λc font le tour complet de l'anneau 10 à travers ces commutateurs CN et CS.

Lorsqu'un usager d'un site 13, qui est relié à l'un des noeuds 12, veut transmettre des informations à cette longueur d'onde λc, cet usager demande au gestionnaire du réseau de réserver la longueur d'onde λc pour effectuer une mise en communication avec un autre usager de son choix qui constitue le destinataire.

Le gestionnaire du réseau vérifie d'abord la disponibilité de ce destinataire puis donne son accord pour la mise en communication et commande les commutateurs optiques des noeuds correspondants.

Ces commutateurs passent de leur position de repos (état « bar ») à leur position de travail (état « cross »).

La liaison est alors établie entre deux usagers de deux noeuds différents et les informations peuvent être échangées à la longueur d'onde λc

Pour mettre fin à la liaison, l'usager qui l'avait demandée signale la fin de la transmission au gestionnaire du réseau et ce dernier interrompt cette liaison par la mise des commutateurs optiques considérés dans l'état « bar ».

L'anneau 10 est à nouveau disponible pour établir d'autres liaisons temporaires à la longueur d'onde λc entre d'autres utilisateurs.

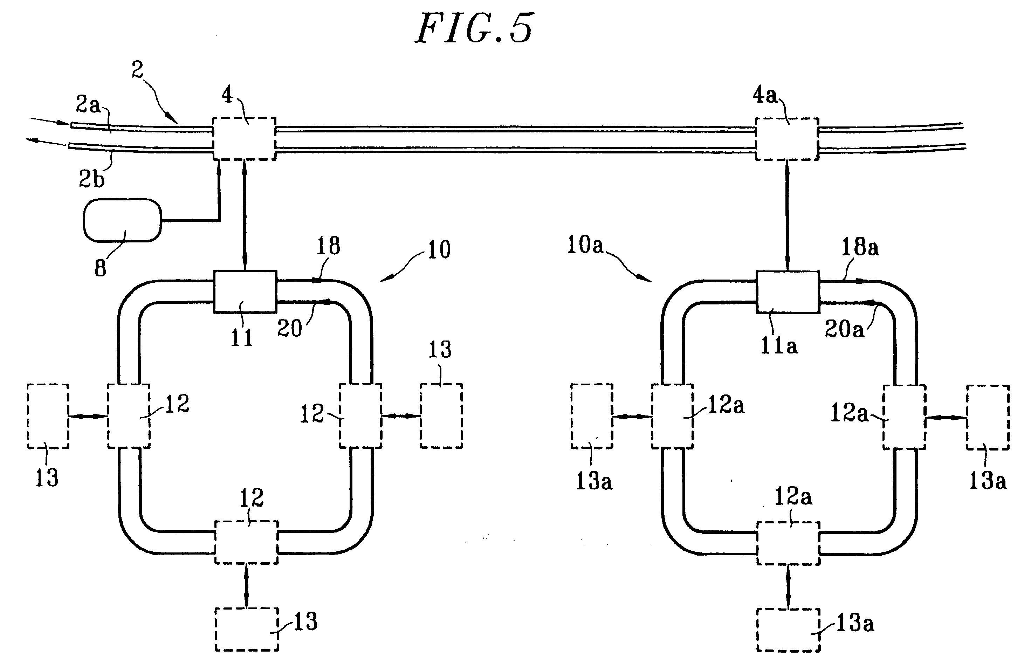

La figure 5 est une vue schématique d'un autre mode de réalisation particulier du réseau objet de l'invention.

Dans le cas de la figure 5, le réseau comprend non seulement l'anneau 10 de la figure 2, qui est relié au réseau principal 2 par l'intermédiaire du noeud principal 4 de ce réseau 2, mais encore un ou plusieurs autres anneaux tel que l'anneau 10a qui est relié à un autre noeud principal 4a du réseau 2.

Le noeud 4a est constitué de la même manière que le noeud 4, avec un MIE que l'on a muni de moyens d'émission-réception à la longueur d'onde λc (non représentés).

On précise toutefois que les moyens de gestion 8 du réseau sont simplement reliés au noeud 4 comme on l'a vu précédemment.

L'anneau 10a est également identique à l'anneau 10, les références des composants de cet anneau 10a étant les mêmes que celles des composants homologues de l'anneau 10 mais suivies de la lettre a.

C'est pourquoi ces anneaux 10 et 10a ont été représentés de manière très schématique sur la figure 5 étant donné que l'anneau 10 est représenté de manière détaillée sur la figure 2 et a été décrit précédemment.

On voit simplement sur la figure 5 les noeuds respectifs 12 et 12a ainsi que les sites respectifs 13 et 13a de ces anneaux 10 et 10a (au nombre de trois dans l'exemple représenté).

On précise que la référence 11 correspond à l'ensemble comprenant le MIE 14 et les moyens XN, EN, IS et RS de la figure 2.

Le réseau de la figure 5 permet d'établir une liaison temporaire entre deux usagers respectivement reliés aux anneaux 10 et 10a par l'intermédiaire du réseau 2.

Au niveau de ce réseau 2 (qui, dans le cas des figures 2 et 5, est également un anneau), les informations échangées sont traitées comme si elles étaient issues d'usagers raccordés à l'anneau 10.

On précise que les interfaces utilisées dans les exemples des figures 2 et 5 appartiennent de préférence à la HNS (débit STM-1) car ces interfaces permettent une supervision de la transmission avec des moyens de gestion actuellement disponibles.

Cependant le débit échangé peut appartenir au domaine numérique de la Hiérarchie Numérique Plésiochrone (2, 8 ou 34 Mbit/s) ou peut correspondre au Mode de Transfert Asynchrone.

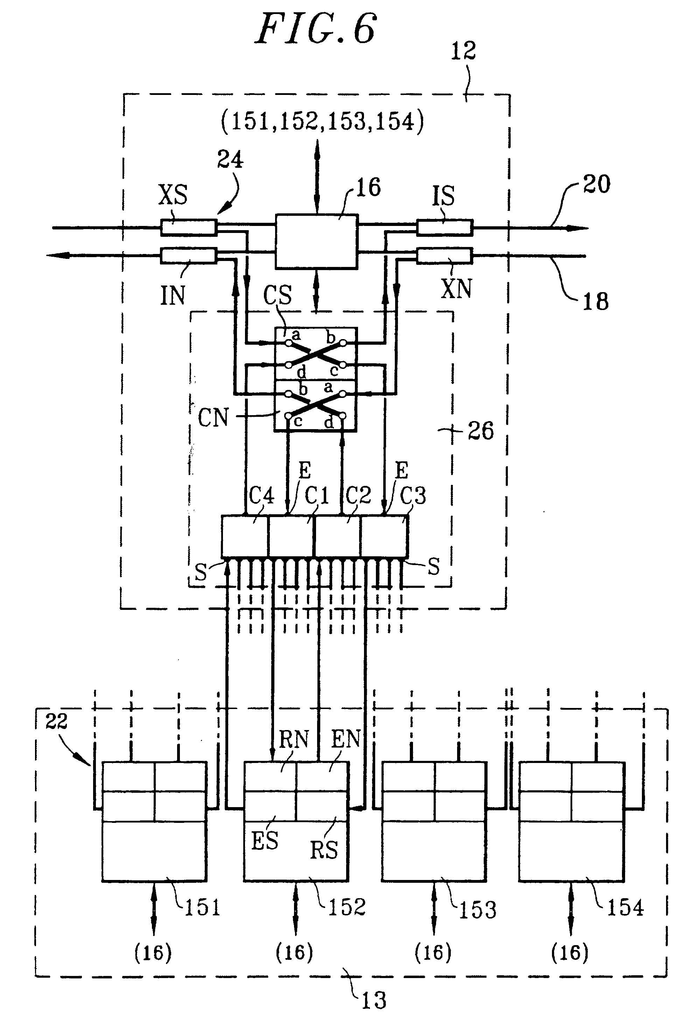

La figure 6 est une vue schématique et partielle d'un autre réseau conforme à l'invention dans lequel un site ou une pluralité de sites de l'anneau 10 de la figure 2, par exemple la totalité de ces sites, comprend non plus un seul usager mais N usagers, N étant un nombre entier au moins égal à 2.

Ce nombre N est égal à 4 dans l'exemple représenté sur la figure 6.

Dans ce cas, on modifie chaque site concerné ainsi que le noeud associé à ce site de la façon suivante.

On voit sur la figure 6 que les quatre usagers du site considéré sont respectivement munis d'équipements (MIE ou d'un multiplexeur terminal) 151, 152, 153, 154.

Chacun de ces équipements est lui-même muni des moyens 22 d'émission-réception à la longueur d'onde λc qui sont mentionnés dans la description de la figure 2.

Le noeud 12 correspondant comprend, en plus des moyens d'insertion-extraction IN, XN, IS, XS et des commutateurs CN, CS mentionnés dans la description de la figure 2, quatre commutateurs optiques de type 1 vers 4 qui sont également commandés par les moyens de gestion 8 du réseau (figure 2) par l'intermédiaire du MIE 16 du noeud considéré et sont référencés C1, C2, C3 et C4.

L'ensemble des commutateurs CN et CS et des commutateurs C1, C2, C3 et C4 forme les moyens de commutation 26 dans le cas de la figure 6.

Chacun de ces commutateurs optiques de type 1 vers 4 est capable de se trouver dans quatre états différents : sous la commande des moyens de gestion 8, son entrée E est susceptible d'être reliée à celle de ses quatre sorties S qui a été choisie.

Les liaisons entre les commutateurs cross-bar CN et CS et les moyens d'insertion-extraction IN, XN, IS, XS sont identiques à celles qui ont été décrites plus haut en faisant référence à la figure 2.

De plus, les bornes c et d du commutateur CN sont respectivement reliées aux entrées des commutateurs C1 et C2 tandis que les bornes c et d du commutateur CS sont respectivement reliées aux entrées des commutateurs C3 et C4

De plus, les sorties des commutateurs C1 à C4 sont reliées aux moyens d'émission-réception dont sont munis les équipements de manière à ce que, lorsque les commutateurs CN et CS sont dans l'état « cross », seulement l'un des quatre usagers soit connecté aux fibres optiques 18 et 20.

On se reportera à la figure 6 où ces commutateurs C1, C2, C3 et C4 sont dans leur état « cross » et l'on a seulement représenté les connexions entre les moyens d'émission-réception de l'un des quatre usagers et ces commutateurs, cet usager étant le seul à être relié aux fibres 18 et 20.

On remarquera que les sorties de même rang j, j allant de 1 à 4, des commutateurs C1 à C4 sont respectivement reliées aux moyens EN, RN, ES, RS affectés à un même équipement.

Dans le cas où les deux commutateurs CN et CS sont dans l'état « bar », aucun des quatre usagers n'est connecté aux fibres optiques 18 et 20.

Dans un mode de réalisation non représenté, en plus de la longueur d'onde λc par exemple égale à 1,3 µm, utilisée pour l'établissement de liaisons temporaires entre les usagers du réseau de la figure 2, on utilise une ou plusieurs autres longueurs d'onde (différentes de λ) pour ces liaisons temporaires.

On utilise par exemple une autre longueur d'onde λ1 égale à 1,58 µm.

On est ainsi capable d'établir simultanément deux liaisons temporaires.

Pour ce faire, il suffit de munir le MIE 6 du noeud 4 de la figure 2 non seulement des moyens d'émission-réception à la longueur d'onde λc mais encore de moyens d'émission-réception supplémentaires, dédiés à la longueur d'onde λ1.

De même on ajoute alors aux moyens d'insertion-extraction, qui sont dédiés à cette longueur d'onde λc et placés à côté du MIE 14, des moyens d'insertion-extraction à la longueur d'onde λ1.

Ces moyens d'insertion-extraction à la longueur d'onde λ1 sont bien entendu reliés aux moyens d'émission-réception supplémentaires du MIE 6.

De même, dans chaque noeud 12, on ajoute alors des moyens d'insertion-extraction supplémentaires dédiés à la longueur d'onde λ1 et, dans le site 13 correspondant, on ajoute à l'équipement 15 des moyens supplémentaires d'émission-réception à la longueur d'onde λ1.

De plus, on ajoute, dans le noeud 12, deux commutateurs optiques cross-bar reliés aux moyens d'insertion-extraction supplémentaires ainsi qu'aux moyens d'émission-réception supplémentaires de l'équipement 15.

Les documents cités dans la présente description sont les suivants :
(1) Ph. Guignard, A. Hamel, « Improvement of an Ethernet Network using multiwavelength techniques », Efoc-Lan'92, pp 346-349.
(2) G. Miller, « IBM building all lightwave network », Lightwave journal, mars 1991.
(3) M.J. Chawki, V. Tholey et al, « Demonstration of a WDM Survivable open ring network using reconfigurable channel dropping receivers », ECOC 94, pp 897-900.
(4) M.I. Irshid, M. Kavehrad, « A fully transparent fiber optic ring architecture for WDM networks », Journal of Lightwave Technology, vol.10 n°1, janvier 92, pp 101-108.
(5) J.E. Baran, D.A. Smith, A. D'Alessandro, « Multiwavelength performance of an apodized acousto-optic switch », OCF'94, pp 57-58.

## Revendications

1. Réseau de transmission reconfigurable, pour le raccordement d'usagers, ce réseau comprenant au moins un anneau (10, 10a) de transmission d'informations sous forme optique et des moyens (8) de gestion du réseau, chaque anneau comprenant :
- une pluralité de noeuds (12, 12a), chaque noeud étant associé à un site (13, 13a) comprenant au moins un usager, et
- au moins une fibre optique en anneau (18, 18a - 20, 20a) qui passe successivement par les noeuds et qui est destinée à être parcourue dans un sens déterminé par les informations,
- dans chaque site, des moyens (EN, ES, RN, RS) d'émission-réception à au moins une longueur d'onde particulière, et
ce réseau étant **caractérisé en ce qu'**il comprend en outre :
- dans chaque noeud, des moyens (IN, IS, XN, XS) d'insertion-extraction optique à la longueur d'onde particulière et des moyens de commutation optique (CN, CS) qui sont aptes à se trouver dans des premier et deuxième états, sont commandés par les moyens de gestion du réseau et sont aptes à relier optiquement les moyens d'émission-réception, que comprend le site correspondant, aux moyens d'insertion-extraction lorsqu'ils sont dans le premier état et à isoler optiquement les moyens d'émission-réception des moyens d'insertion-extraction lorsqu'ils sont dans le deuxième état, ces moyens d'insertion-extraction étant destinés à extraire, de chaque fibre optique en anneau, des informations à la longueur d'onde particulière pour les envoyer aux moyens d'émission-réception du site correspondant et à insérer, dans chaque fibre optique en anneau, des informations à la longueur d'onde particulière provenant de ces moyens d'émission-réception,
de manière à pouvoir créer, sous la commande des moyens de gestion, des liaison optiques temporaires à la longueur d'onde particulière, entre des usagers de sites distincts, à raison de deux usagers à la fois.

2. Réseau selon la revendication 1, dans lequel chaque noeud comprend un multiplexeur à insertion-extraction électronique (16) qui est destiné à échanger des informations sous forme optique avec le site correspondant et par l'intermédiaire duquel les moyens de gestion commandent les moyens de commutation optique de ce noeud.

3. Réseau selon l'une quelconque des revendications 1 et 2, dans lequel l'anneau (10) est relié à un réseau principal de transmission d'informations (2), au moins un multiplexeur à insertion-extraction électronique (6) étant installé sur ce réseau principal de transmission d'informations, muni de moyens (EN, ES, RN, RS) d'émission-réception à longueur d'onde particulière et relié à l'anneau (10, 10a) par l'intermédiaire de moyens (IN, IS, XN, XS) d'insertion-extraction à la longueur d'onde particulière.

4. Réseau selon l'une quelconque des revendications 1 et 2, comprenant une pluralité d'anneaux (10, 10a) reliés à un réseau principal de transmission d'informations (2), une pluralité de multiplexeurs à insertion-extraction électroniques (6) étant installés sur ce réseau principal de transmission d'informations et respectivement associés aux anneaux, chaque multiplexeur à insertion-extraction électronique étant muni de moyens (EN, ES, RN, RS) d'émission-réception à la longueur d'onde particulière et relié à l'anneau correspondant par l'intermédiaire de moyens (IN, IS, XN, XS) d'insertion-extraction à la longueur d'onde particulière.

5. Réseau selon l'une quelconque des revendications 1 à 4, dans lequel au moins un site (13) comprend N usagers respectivement associés à N moyens d'émission-réception à la longueur d'onde particulière, N étant un nombre entier au moins égal à 2, le noeud (12) correspondant à ce site comprenant N commutateurs optiques (C1, C2, C3, C4) de type 1 vers N qui sont commandés par les moyens (8) de gestion du réseau de manière à pouvoir créer une liaison optique à la longueur d'onde particulière entre l'un quelconque des usagers de ce site et un usager d'un autre site.

6. Réseau selon l'une quelconque des revendications 1 à 5, comprenant deux fibres optiques en anneau (18, 18a - 20, 20a) qui sont destinées à être parcourues en sens contraires par les informations.

7. Réseau selon l'une quelconque des revendications 1 à 6, dans lequel les moyens de commutation optiques (CN, CS) aptes à se trouver dans les premier et deuxième états sont des commutateurs de type cross-bar.

8. Réseau selon l'une quelconque des revendications 1 à 7, dans lequel les informations sous forme optique ont une longueur d'onde égale à 1,3 µm et la longueur d'onde particulière est égale à 1,5 µm.

9. Réseau selon l'une quelconque des revendications 1 à 7, dans lequel chaque site (13) comprend des moyens d'émission-réception à une pluralité de longueurs d'onde particulières, qui sont respectivement associés à une pluralité de moyens d'insertion-extraction optiques à ces longueurs d'onde particulières, de manière à pouvoir établir simultanément une pluralité de liaisons optiques temporaires.

10. Réseau selon l'une quelconque des revendications 1 à 9, dans lequel chaque anneau (10, 10a) est conçu pour utiliser la norme Hiérarchie Numérique Synchrone.

## Patentansprüche

1. Rekonfigurierbares Übertragungsnetz für den Anschluss von Nutzern, wobei dieses Netz mindestens einen Ring (10,10a) zur Übertragung von Informationen in optischer Form sowie Mittel (8) zur Verwaltung bzw. Steuerung des Netzes aufweist, wobei jeder Ring umfasst:
- mehrere Knoten (12,12a), wobei jeder Knoten einem/einer Standort bzw. Site (13,13a) zugeordnet ist, der/die mindestens einen Nutzer umfasst, und
- mindestens eine Ring-Optikfaser (18,18a-20,20a), welche der Reihe nach die Knoten durchläuft und dazu bestimmt ist, in einer bestimmten Richtung von den Informationen durchlaufen zu werden,
- an jeder Site Mittel (EN,ES,RN,RS) zum Senden/Empfangen auf mindestens einer bestimmten Wellenlänge,
wobei dieses Netz **dadurch gekennzeichnet ist, dass** es außerdem umfasst:
- an jedem Knoten Mittel (IN,IS,XN,XS) zum optischen Einfügen/Extrahieren auf der bestimmten Wellenlänge sowie Mittel zum optischen Wandeln (CN,CS), die sich in ersten und zweiten Zuständen befinden können, die von den Steuermitteln des Netzes gesteuert werden und die die Sende-Empfangsmittel, welche die entsprechende Site aufweist, mit Einfüge-Extraktionsmitteln optisch verbinden können, wenn sie sich in dem ersten Zustand befinden, und die die Sende-Empfangsmittel von den Einfüge-Extraktionsmitteln optisch isolieren können, wenn sie sich im zweiten Zustand befinden, wobei die Einfüge-Extraktionsmittel dazu bestimmt sind, aus jeder ringförmigen Optikfaser Informationen auf der bestimmten Wellenlänge zu extrahieren, um sie den Sende-Empfangsmitteln der entsprechenden Site zu senden und in jede ringförmige Optikfaser Informationen mit der bestimmten Wellenlänge, die von den Sende-Empfangsmitteln kommen, einzufügen,
so dass unter der Steuerung der Steuerungsmittel temporäre optische Verbindungen auf der bestimmten Wellenlänge zwischen Nutzern unterschiedlicher Sites, und zwar bei zwei Nutzern gleichzeitig, geschaffen werden können.

2. Netz nach Anspruch 1, wobei jeder Knoten einen elektronischen "ADD"-Drop-Multiplexer bzw. Abzweig-Multiplexer (16) umfasst, der dazu bestimmt ist, Informationen in optischer Form mit der entsprechenden Site auszutauschen, und über den die Steuermittel die optischen Wandlermittel dieses Knotens steuern.

3. Netz nach einem der Ansprüche 1 oder 2, wobei der Ring (10) mit einem Haupt-Informationsübertragungsnetz (2) verbunden ist, wobei mindestens ein elektronischer Add-Drop-Multiplexer (6) in diesem Haupt-Informationsübertragungsnetz installiert ist, mit Mitteln (EN,ES,RN,RS) zum Senden/Empfangen auf einer bestimmten Wellenlänge versehen ist, und mit dem Ring (10,10a) über "ADD"-Drop-Mittel (IN,IS,XN,XS) auf der bestimmten Wellenlänge verbunden ist.

4. Netz nach einem der Ansprüche 1 oder 2, umfassend mehrere Ringe (10,10a), die mit einem Haupt-Informationsübertragungsnetz (2) verbunden sind, mehrere elektronische ADD-Drop-Multiplexer (6), die in diesem Haupt-Informationsübertragungsnetz installiert sind, und jeweils den Ringen zugeordnet sind, wobei jeder elektronische ADD-Drop-Multiplexer mit Mitteln (EN,ES,RN,RS) zum Senden/Empfangen auf der bestimmten Wellenlänge versehen ist und mit dem entsprechenden Ring über Add-Drop-Mittel (IN,IS,XN,XS) auf der bestimmten Wellenlänge verbunden ist.

5. Netz nach einem der Ansprüche 1 bis 4, wobei mindestens eine Site (13) N Nutzer umfasst, der jeweils N Mitteln zum Senden-Empfangen auf der bestimmten Wellenlänge zugeordnet sind, wobei N eine ganze Zahl mindestens gleich 2 ist, der dieser Site entsprechende Knoten (12) N optische Wandler (C1,C2,C3,C4) vom Typ 1 nach N umfasst, welche von den Mitteln (8) zum Steuern des Netzes gesteuert werden, um eine optische Verbindung auf der bestimmten Wellenlänge zwischen irgendeinem der Nutzer dieser Site und einem Nutzer einer anderen Site herzustellen.

6. Netz nach einem der Ansprüche 1 bis 5, mit zwei optischen Fasern in Ringform (18,18a,20,20a), die dazu vorgesehen sind, von den Informationen in entgegengesetzten Richtungen durchlaufen zu werden.

7. Netz nach einem der Ansprüche 1 bis 6, wobei die optischen Wandlermittel (CN,CS), die sich in dem ersten und zweiten Zustand befinden können, Wandler vom sog. Cross-Bar-Typ sind.

8. Netz nach einem der Ansprüche 1 bis 7, wobei die Information in optischer Form eine Wellenlänge = 1,3µm aufweisen, und die bestimmte Wellenlänge = 1,5µm ist.

9. Netz nach einem der Ansprüche 1 bis 7, wobei jede Site (13) Sende-Empfangsmittel auf mehreren, bestimmten Wellenlängen aufweist, welche jeweils mehreren optischen ADD-Drop-Mitteln auf diesen bestimmten Wellenlängen zugeordnet sind, um gleichzeitig mehrere temporäre optische Verbindungen herstellen zu können.

10. Netz nach einem der Ansprüche 1 bis 9, wobei jeder Ring (10,10a) für die Anwendung der synchronen digitalen Hierarchie-Norm ausgestaltet ist.

## Claims

1. Reconfigurable transmission network for connection of users, this network comprising at least one information transmission ring (10, 10a) in optical form and network management means (8), each ring comprising:
- several nodes (12, 12a), each node being associated with a site (13, 13a) on which there is at least one user, and
- at least one optical fibre in the form of a ring (18, 18a - 20, 20a) that passes through each node in turn and which is designed to carry information in a given direction,
- on each site, transmission-reception means (EN, ES, RN, RS) for one or more particular wave lengths,
this network being **characterized in that** it also comprises:
- at each node, optical add-drop means (IN, IS, XN, XS) for the particular wave length and optical switching means (CN, CS) that are capable of being in first and second states, are controlled by the network management means and are capable of optically connecting the transmission-reception means included on the corresponding site, to the add-drop means when they are in the first state, and optically isolating the transmission-reception means from the add-drop means when they are in the second state, these add-drop means being designed to extract information at the particular wave length from each optical fibre in the form of a ring, to send them to the transmission-reception means on the corresponding site and to insert information at the particular wave length from these transmission-reception means in each optical fibre in the form of a ring,
in order to create temporary optical links at the particular wave length under the control of the management means, between users on distinct sites, for two users at a time.

2. Network according to claim 1, in which each node comprises an electronic add-drop multiplexer (16) which is designed to exchange information in optical form with the corresponding site, and through which management means control optical switching means for this node.

3. Network according to either of the claims 1 and 2, in which the ring (10) is connected to a main information transmission network (2), at least one electronic add-drop multiplexer (6) being installed on this main information transmission network, equipped with transmission-reception means (EN, ES, RN, RS) for a particular wave length and connected to ring (10, 10a) through add-drop means (IN, IS, XN, XS) for the particular wave length.

4. Network according to either of the claims 1 and 2, comprising several rings (10, 10a) connected to a main information transmission network (2), several electronic add-drop multiplexers (6) being installed on this main information transmission network and each associated with rings, each electronic add-drop multiplexer being equipped with transmission-reception means (EN, ES, RN, RS) for the particular wave length and connected to the corresponding ring through add-drop means (IN, IS, XN, XS) for the particular wave length.

5. Network according to any one of the claims 1 to 4, in which at least one site (13) comprises N users each associated with N transmission-reception means for the particular wave length where N is an integer number not less than 2, the node (12) corresponding to this site comprising N type 1 to N optical switches (C1, C2, C3, C4) which are controlled by network management means (8) so as to create an optical link at the particular wave length between any one of the users on this site and a user on another site.

6. Network according to any one of the claims 1 to 5, comprising two optical fibres in the form of a ring (18, 18a - 20, 20a) which will carry information in opposite directions.

7. Network according to any one of claims 1 to 6, in which the optical switching means (CN, CS) capable of being in the first and second states are cross-bar type switches.

8. Network according to any one of the claims 1 to 7, in which the wave length of the information in optical form is equal to 1.3 µm and the particular wave length is equal to 1.5 µm.

9. Network according to any one of the claims 1 to 7, in which each site (13) comprises transmission-reception means for several particular wave lengths, which are associated with several optical add-drop means for these particular wave lengths, so as to set up several temporary optical links at the same time.

10. Network according to any one of the claims 1 to 9, in which each ring (10, 10a) is designed to use the Synchronous Digital Hierarchy.
